# EUROPÄISCHE PATENTSCHRIFT

(11) **EP 2 475 910 B1**
(45) Veröffentlichungstag und Bekanntmachung des Hinweises auf die Patenterteilung: **21.06.2017**
(21) Anmeldenummer: 10751870.6
(22) Anmeldetag: 20.08.2010
(51) Int. Cl.: F16G 1/10, F16G 5/08, F16G 1/28

(54) **KRAFTÜBERTRAGUNGSRIEMEN, INSBESONDERE ZAHNRIEMEN, UND VERFAHREN ZU DESSEN HERSTELLUNG**
POWER TRANSMISSION BELT, IN PARTICULAR TOOTHED BELT, AND METHOD FOR THE PRODUCTION THEREOF
COURROIE DE TRANSMISSION D'ÉNERGIE, EN PARTICULIER COURROIE CRANTÉE, ET SON PROCÉDÉ DE PRODUCTION

(30) Priorität: 11.09.2009 DE 102009040903; 07.07.2010 DE 102010017781
(43) Veröffentlichungstag der Anmeldung: 18.07.2012
(73) Patentinhaber: ContiTech Antriebssysteme GmbH, 30165 Hannover (DE)
(72) Erfinder: TEVES, Reinhard, 30926 Seelze (DE); MAHNKEN, Claus-Lüder, 27367 Ahausen (DE); BALTES, Thomas, 30177 Hannover (DE); UNRUH, Axel, 30655 Hannover (DE); GASKA, Roman, 31319 Sehnde (DE)
(74) Vertreter: Finger, Karsten
(86) Internationale Anmeldenummer: PCT/EP2010/062145
(87) Internationale Veröffentlichungsnummer: WO 2011/029710

(56) Entgegenhaltungen:
- EP-A1- 1 396 658
- DE-A1-102007 061 735
- US-A- 5 112 282
- US-A- 5 322 479
- Deutsches Institut für Normung: "DIN 55945:2007-03" Deutsches Institut für Normung 1. März 2007 (2007-03-01), XP008128686 Gefunden im Internet: URL:http://www.nab.din.de [gefunden am 2010-11-04] in der Anmeldung erwähnt

## Beschreibung

Die Erfindung betrifft einen Kraftübertragungsriemen mit einem elastischen Grundkörper, umfassend eine Decklage als Riemenrücken und einen Unterbau mit einer Kraftübertragungszone, wobei die Kraftübertragungszone und / oder die Decklage mit einer Beschichtung versehen ist bzw. sind. Die Erfindung betrifft ferner ein Verfahren zur Herstellung eines derartigen Antriebsriemens.

Kraftübertragungsriemen, die auch als Antriebsriemen bezeichnet werden und im Funktionszustand endlos geschlossen sind, können als Flachriemen, Keilriemen, Keilrippenriemen und Zahnriemen ausgebildet sein, siehe zum Beispiel DE102007061735 oder EP1396658. Die Oberfläche dieser Kraftübertragungsriemen, insbesondere eines Zahnriemens, muss gute Gleiteigenschaften aufweisen und verschleißbeständig sein. Erreicht wird eine derartige Oberfläche durch eine Beschichtung mit oder ohne textile Auflage.

Wird der Kraftübertragungsriemen unter einer Ölatmosphäre betrieben, so ist zusätzlich eine gute Ölbeständigkeit gefordert, wobei die Beschichtung und die darunter liegende(n) Gummimischung(en) vor dem Eindringen von Öl geschützt werden.

Üblicherweise werden hierzu Gemische aus einer flexiblen Polymerschicht mit Füllstoffen verwendet, die gleichzeitig gut gleitfähig und ölbeständig sind.

DE4400434A1, EP0662571A1 und EP1088177A1 beschreiben Gewebeschichtungen, die aus einer Polyurethanbeschichtung mit teilchenförmigen Fluorpolymeren bestehen und eine gute Abriebbeständigkeit ergeben. Die 2-komponentige Beschichtungsmasse ist sehr dünnflüssig, dringt relativ tief in das Gewebe ein und vernetzt zu einer abriebbeständigen Schicht. Diese Schichten sind jedoch aufgrund ihrer offenen Struktur für viele Anwendungen nicht abriebbeständig genug. Des Weiteren sind sie aufgrund dieser offenen Struktur nicht ölbeständig und aufgrund der verwendeten Polyurethane für viele Anwendungen nicht ausreichend wärmestabil.

Der Mangel an Wärmbeständigkeit wird in EP1818567A1 aufgegriffen und offenbart, dass 1,2 Diole nicht so gut wärmebeständig sind, wie die längerkettigen 1-omega Diole. Wiederum zeigen sich Probleme bezüglich Abrieb- und Ölbeständigkeit.

DE102008013570A1 beschreibt Beschichtungssysteme für Gewebeoberflächen von Kraftübertragungsriemen, wobei die Beschichtung ein Polyisocyanurat - Polyharnstoff enthält, das aus einem Isocyanat mit wenigstens zwei NCO-Gruppen als Basiskomponente gebildet ist. Diese Beschichtung zeigt hervorragende Gleitfähigkeit bei guter Wärmebeständigkeit, besitzt aber aufgrund der Empfindlichkeit der Beschichtungsmassen eine ungünstige Verarbeitbarkeit. Außerdem ist durch die notwendigen Lösemittel keine tief in das Gewebe eindringende Beschichtung möglich.

Gleitsysteme für Riemen mit geschlossenen Oberflächen werden für trockene Anwendungen in EP1157813A1, WO2005038294A1, WO2005080821A1 und EP1881229A1, für Anwendungen in Öl in WO2005080820A1 und WO2007036960A1 beschrieben. Den in den Druckschriften beschriebenen Systemen ist gemeinsam, dass die aus einer Beschichtung aus einer elastomeren Matrix und eines in weniger als 50% Menge vorhandenen Gleitmittels, bevorzugt fluorpolymerhaltig, bestehen. Basis der elastomeren Matrix sind immer im Handel erhältliche Polymere, die aufgrund ihres hohen Molekulargewichtes von >5000g/mol bei der Applikation ohne oder fast ohne Lösemittel keine Möglichkeit haben, in das Gewebe einzudringen. Die Schicht deckt somit das Gewebe zwar ab, dringt aber nicht in dieses ein, was einerseits zu einer leichten Zerrüttung des Gewebes führt und andererseits in Anwendung zu Rissen, durch die z.B. Öl leicht durchdringen kann.

Eine verbesserte Wärmebeständigkeit und einen verbesserten Widerstand gegen das Überspringen von Zähnen soll der in DE69231029T2 offenbarte Zahnriemen gewährleisten. Hierbei umfassen Zahngummi und Rückengummi ein mit organischem Peroxid vernetztes hydriertes Nitrilkautschukpolymer und ein Co-Vernetzungsmittel, das N,N'-m-Phenylendimaleimid in Kombination mit einer Verbindung aus verschiedenen Acrylaten, Isocyanuraten, Mellitaten Phtalaten, Carboxylaten oder Metallsalzen umfasst. Vorteile hinsichtlich Abrieb- und / oder Ölbeständigkeit sind hierbei nicht bekannt.

Es ist daher die Aufgabe der vorliegenden Erfindung, einen Kraftübertragungsriemen bereitzustellen, dessen Kraftübertragungszone und / oder Decklage eine Beschichtung besitzt, welche medienbeständig, insbesondere ölbeständig, und abriebbeständig ist ohne Einbußen hinsichtlich dynamischer Belastbarkeit und Langlebigkeit hinnehmen zu müssen. Medienbeständig bedeutet, dass der Kraftübertragungsriemen insbesondere beständig gegenüber Gasen, Säuren, Laugen, Lösemitteln, Kohlenwasserstoffen und Kohlenwasserstoffverbindungen, Kraftstoffen, Ölen und Ölnebeln sein soll. Bevorzugt ist hier die Beständigkeit gegenüber Öl und Ölnebeln, wobei der Riemen durchaus auch für die Trockenanwendung geeignet sein soll.

Gelöst wird diese Aufgabe durch den Kraftübertragungsriemen gemäß Anspruch 1. Decklage und Unterbau bilden dabei als Gesamteinheit den elastischen Riemengrundkörper des Kraftübertragungsriemens, der aus einem elastomeren Werkstoff besteht, insbesondere in Form einer vulkanisierten Kautschukmischung. Als Kautschukkomponente wird zumeist ein Ethylen-Propylen-Mischpolymerisat (EPM), ein Ethylen-Propylen-Dien-Misch-Polymerisat (EPDM), ein (teil)hydrierter Nitrilkautschuk (HNBR), Chloroprenkautschuk (CR) oder Fluor-Kautschuk (FPM) eingesetzt. Etwaige Zugstränge bestehen aus Stahl, Polyamid, Aramid, Polyester, Glasfasern, Kohlefasern, Polyetherketon (PEEK) oder Polytehylen-2,6-naphthalat (PEN).
Die Basisbeschichtung besteht vorteilhafterweise aus einem Gewebe, Gewirke oder Gestrick. Bevorzugt findet als Material für das Gewebe, Gewirke oder Gestrick Baumwolle oder weitere Naturfasern, wie beispielsweise Flachs, Leinen oder Hanf Verwendung. Ebenso kann aber auch Aramid, Nylon und / oder Polyester verwendet werden.

Überraschenderweise wurde gefunden, dass sich ein derartig beschichteter Riemen durch eine besonders gute Medienbeständigkeit, insbesondere gegenüber Öl, auszeichnet. Gleichzeitig zeigen sich Verbesserungen hinsichtlich Abriebbeständigkeit und Gleitfähigkeit und sich daraus ergebender Langlebigkeit. Die Geräuschentwicklung, die vor allem im Automobilbereich für immer mehr Hersteller bzw. deren Kunden relevant ist, bleibt überraschend auf einem annähernd gleichen Niveau.

Der Reaktivverdünner gemäß DIN 55945:2007-03 ist ausgewählt aus der Gruppe der Methacrylate und / oder der Acrylate und / oder Vinylether und / oder Glycidylether, wobei Methacrylate und / oder Acrylate besonders bevorzugt sind.
Werden Acrylate verwendet, so haben diese bevorzugt Isocyanatgruppen. Ebenso sind difunktionelle Gruppen am Kettenende des Reaktivverdünners bevorzugt.
In einer besonders bevorzugten Ausführungsform handelt es sich bei dem Reaktivverdünner um Dipropylenglycoldiacrylat (DPGDA) und / oder Tripropylenglycoldiacrylat (TPGDA) und / oder Hexandioldiacrylat (HDDA), bevorzugt Hexan-1,6-dioldiacrylat (1,6-HDDA) und / oder Trimethylpropantriacrylat (TMPTA) und / oder Diurathendimethacrylat (HEMA-MDI).
Es kann jeweils ein Reaktivverdünner alleine oder in Kombination mit wenigstens einem weiteren verwendet werden.

Es hat sich als vorteilhaft gezeigt, wenn der genannte Reaktivverdünner im Gemisch A in Mengen von 2 bis 90 Gew. -%, bevorzugt in Mengen von 5 bis 90 Gew. -%, besonders bevorzugt in Mengen von 6 bis 90 Gew. -%, wiederum besonders bevorzugt in Mengen von 10 bis 80 Gew. -%, eingesetzt wird.
Der Reaktivverdünner kann hierbei auch Lösemittel enthalten. Die Gewichtsprozentangaben beziehen sich in diesem Fall auf Reaktivverdünner inklusive Lösemittel.

Die in dieser Schrift aufgeführten Angaben beziehen sich immer auf Gewichtsprozent, sofern nichts anderes angegeben ist.

Weiterhin ist es vorteilhaft, wenn das Gemisch A zusätzlich wenigstens ein Vernetzungsmittel und / oder wenigstens einen pulverförmigen Gleitkörper enthält.
Als Vernetzungsmittel können alle der fachkundigen Person bekannten Vernetzungsmittel und Vernetzungshilfsmittel verwendet werden. Weiterhin handelt es sich bei der Vernetzung der Oberflächen-beschichtung bevorzugt um eine radikalische Vernetzung.

Enthält das Gemisch A einen pulverförmigen Gleitkörper, so wird dieser in Mengen von 0,1 bis 50 Gew. -%, bevorzugt in Mengen von 5 bis 49 Gew. -%, besonders bevorzugt in Mengen von 10 bis 40 Gew. -%, verwendet. Der pulverförmige Gleitkörper des Gemischs A ist ausgewählt aus der Gruppe bestehend aus Polytetrafluorethylen (PTFE) und / oder modifiziertem Polytetrafluorethylen (TFM) und / oder Fluorethylenpolymer (FEP) und / oder Perfluoralkylvinylether-Tetraethylen-Copolymer (PFA) und / oder Ethylen-Tetrafluorethylen-Copolymer (ETFE) und / oder Polyvinylfluorid (PVF) und / oder Polyvinylidenflourid (PVDF) und / oder ultrahochmolekularem Polyethylen (UHMWPE), wobei Polytetrafluorethylen (PTFE) und / oder modifiziertes Polytetrafluorethylen (TFM) besonders bevorzugt sind.
Es ist auch denkbar andere, der fachkundigen Person bekannte pulverförmige Gleitkörper, wie beispielsweise Silikate, Sulfide, Graphit, etc. zu verwenden.

Die genannten pulverförmigen Gleitkörper können alleine oder in Kombination verwendet werden.

Vorteilhafterweise hat der pulverförmige Gleitkörper einen Reibbeiwert zu Stahl von kleiner oder gleich 3.

Ein deutlicher Vorteil der vorliegenden Erfindung ist es, dass bei Einsatz eines pulverförmigen Gleitkörpers dieser in Mengen von 50 Gew. -% und weniger verwendet werden kann. Aus dem Stand der Technik sind bisher deutlich höhere Mengen bekannt, was vor allem beim Einsatz von PTFE ein wesentlicher Kostenfaktor ist. In der vorliegenden Erfindung führen mehr als 50 Gew. -% eines pulverförmigen Gleitkörpers zu mangelnder dynamischer Beständigkeit.

Zusätzlich kann die Oberflächenbeschichtung noch ein weiteres zweites Gemisch B enthalten, welches aus wenigstens einem Isocyanat und / oder wenigstens einem Polyol aufgebaut ist.

Das Isocyanat kann ein Polyisocyanat sein, welches ausgewählt ist aus der Gruppe enthaltend Hexamethylendiisocyanat (HDI) und / oder Isophorondiisocyanat (IPDI) und / oder 4,4'-Dicyclohexylmethandiisocyanat (H₁₂MDI) und / oder Hexahydrotoluylendiisocyanat (H₆TDI), wobei jedes dieser Polyisocyanate als Biuret oder Uretdion oder Allophanat oder Isocyanurat oder Iminooxadiazindion vorliegen und alleine oder im Gemisch verwendet werden kann. Bevorzugt ist der Einsatz von HDI.

Bei den Polyolen kann es sich sowohl um Diole als auch um Triole handeln.

Das weitere zweite Gemisch B enthält bevorzugt zusätzlich wenigstens einen teilchenförmigen Füllstoff. Hierbei kann es sich um Fluorverbindungen, wie Polytetrafluorethylen (PTFE) und / oder modifiziertem Polytetrafluorethylen (TFM) und / oder Fluorethylenpolymer (FEP) und / oder Perfluoralkylvinylether-Tetraethylen-Copolymer (PFA) und / oder Ethylen-Tetrafluorethylen-Copolymer (ETFE) und / oder Polyvinylfluorid (PVF) und / oder Polyvinylidenflourid (PVDF) und / oder ultrahochmolekularem Polyethylen (UHMWPE) handeln, aber auch um Silikate, wie beispielsweise Glimmer, Sulfide, wie beispielsweise Molybdänsulfid, Graphit und weitere der fachkundigen Person bekannte. Bevorzugt sind wiederum Polytetrafluorethylen (PTFE) und modifiziertes Polytetrafluorethylen (TFM).

Die genannten teilchenförmigen Füllstoffe können alleine oder in Kombination eingesetzt werden. Sie dienen als Gleit- bzw. Schmiermittel und tragen zur Reduzierung des Reibbeiwertes bei.

Im Gemisch B kann zusätzlich wenigstens ein Lösemittel vorhanden sein.

Enthält die Oberflächenbeschichtung ein Gemisch A als erstes Gemisch und ein zweites Gemisch B, so hat es sich als vorteilhaft gezeigt, wenn das Verhältnis von Gemisch A zu Gemisch B sieben zu drei (7:3) bis eins zu eins (1:1) beträgt.

Eine besonders gute Medienbeständigkeit wird erzielt, wenn die Eindringtiefe der Oberflächenbeschichtung in die Basisbeschichtung wenigstens der Hälfte der Dicke der Basisbeschichtung entspricht. Vorteilhafterweise handelt es sich bei der Oberflächenbeschichtung um eine geschlossene Struktur ohne offene Poren, durch die üblicherweise verschiedene Medien, wie beispielsweise Öl, in das Innere des Riemens gelangen können.

Der Kraftübertragungsriemen findet Verwendung als Flachriemen, Keilriemen, Keilrippenriemen und Zahnriemen, wobei letzterer besonders bevorzugt ist.
Der Zahnriemen kann mit der Beschichtung, bestehend wenigstens aus Oberflächenbeschichtung und Basisbeschichtung, vollständig ummantelt sein, wenigstens aber die Kraftübertragungszone ist mit der erfindungsgemäßen Beschichtung versehen.

Es ist weiterhin möglich, dass auch die Kautschukmischung des Grundkörpers einen Reaktivverdünner gemäß DIN 55945:2007-03 als Bestandteil enthält und / oder dass auf die verwendete Textilauflage eine separate Beschichtung, welche den genannten Reaktivverdünner enthält, aufgebracht wird, bevor sie als Basisbeschichtung zum Einsatz kommt.

Eine weitere Aufgabe der Erfindung besteht darin, ein Verfahren zur Herstellung eines Kraftübertragungsriemens, insbesondere eines Zahnriemens, bereitzustellen, bei dem das eingangs genannte Anforderungsprofil gewährleistet wird. Der Zahnriemen kann durch das erfindungsgemäße Verfahren vollständig ummantelt werden, wenigstens aber die Kraftübertragungszone wird durch das Verfahren beschichtet.

Gelöst wird diese Aufgabe durch das Verfahren gemäß Anspruch 9. Bezüglich der Zusammensetzung des Gemischs A sei an dieser Stelle auf die bereits in den obigen Abschnitten vorliegende Charakterisierung verwiesen. Insbesondere hinsichtlich des Reaktivverdünners und dessen Auswahl. Ebenso bezüglich des vorteilhafterweise zusätzlich in dem Gemisch A vorhandenen Vernetzungsmittels und / oder pulverförmigen Gleitkörpers.
Die Oberflächenbeschichtung, welche im Rahmen des erfindungsgemäßen Verfahrens aufgebracht wird, kann zusätzlich ein zweites Gemisch B enthalten, welche wenigstens aus einem Isocyanat und / oder wenigstens einem Polyol aufgebaut ist. Ebenso kann in dem zweiten Gemisch B noch wenigstens ein teilchenförmiger Füllstoff enthalten sein. Bezüglich der weiteren Charakterisierung des zweiten Gemisches B und des bevorzugten Verhältnisses zwischen dem Gemisch A als erstes Gemisch und dem Gemisch B als zweites Gemisch sei auch wieder auf obige Abschnitte verwiesen.

Ein besonderer Vorteil des erfindungsgemäßen Verfahrens liegt darin, dass die Oberflächenbeschichtung in die Basisbeschichtung eindringt und zwar derart, dass die Eindringtiefe der Oberflächenbeschichtung in die Basisbeschichtung wenigsten der Hälfte der Dicke der Basisbeschichtung entspricht. Des Weiteren bildet sich hierbei innerhalb der Oberflächenbeschichtung eine geschlossene Struktur ohne offene Poren, so dass ein Eindringen von verschiedenen Medien, wie beispielsweise Öl, in das Innere des Riemens vollständig vermieden werden kann.

Die Basisbeschichtung wird auf der Kontaktseite zum elastischen Grundkörper haftfreundlich präpariert. Dies bedeutet, dass wenigstens ein Haftvermittler, wenigstens ein Haftzement oder wenigstens eine Haftung herbeiführende Gummilösung verwendet wird. Auch weitere, der fachkundigen Person bekannte Verfahren oder Materialien können verwendet werden, um eine Haftung von Basisbeschichtung und elastischem Grundkörper zu gewährleisten.

Weitere Vorteile des erfindungsgemäßen Verfahrens sind:
- Kein Abdampfen mehr notwendig;
- Es kann eine vollständige Vernetzung der Oberflächenbeschichtung verwirklicht werden, insbesondere in Verbindung mit einer radikalischen Vernetzung;
- Es werden keine oder nur vergleichsweise wenige Lösemittel benötigt.

Die Erfindung wird nun anhand von Versuchsbeispielen näher vorgestellt werden. Tabelle 1 zeigt die entsprechenden Beschichtungszusammensetzungen auf, während in Tabelle 2 die Versuchsergebnisse dargestellt sind. Vergleichsbeschichtungen, die aus dem Stand der Technik bekannt sind, sind mit "V" gekennzeichnet, während erfindungsgemäße Beschichtungszusammensetzungen mit "E" gekennzeichnet sind.

Die Angaben in Tabelle 1 beziehen sich immer auf Gewichtsprozent [Gew. -%].

**Tabelle 1**

| | V1 | V2 | E1 | E2 | E3 | E4 | E5 | E6 | E7 |
|---|---|---|---|---|---|---|---|---|---|
| Gemisch B^{a} | 50 | -- | -- | -- | -- | -- | -- | -- | 10 |
| Gemisch B^{b} | 50 | -- | -- | -- | 10 | -- | -- | -- | 10 |
| HNBR^{c} | -- | 20 | 60 | -- | -- | -- | -- | -- | -- |
| ZDMA^{d} | -- | 20 | -- | -- | -- | -- | -- | -- | -- |
| TBPD^{e} | -- | -- | 10 | 4 | 4 | 4 | 4 | 4 | 4 |
| Bismaleinimid | -- | -- | 10 | -- | -- | -- | -- | -- | -- |
| PTFE-Pulver | -- | 60 | 10 | 20 | 20 | 20 | 20 | 20 | 20 |
| RV1 | -- | -- | 10 | 43 | 38 | 33 | 33 | -- | 23 |
| RV2 | -- | -- | -- | 33 | 28 | -- | -- | -- | -- |
| RV3 | -- | -- | -- | -- | -- | 43 | -- | -- | -- |
| RV4 | -- | -- | -- | -- | -- | -- | 43 | 43 | 33 |
| RV5 | -- | -- | -- | -- | -- | -- | -- | 33 | -- |

| | | | | | | | | | |
|---|---|---|---|---|---|---|---|---|---|
| ^{a} und ^{b}: PTFE-Pulver, Lösemittelgemisch aus den polyurethanbildenden Komponenten Diisocyanat und einer Mischung aus kurz- und mittelkettigen Diolen, im Wesentlichen 1,2-Propandiol, Ethandiol undd 1,6-Hexandiol, und Polyester-Polyolen mit kurzen und mittleren -O-CₓR_{y}-O-Bausteinen, Xylan 1642 A (^{a}) und Xylan 1642 B (^{b}), Fa. Whitford ^{c} hydriertes Acrylnitril-Butadiencopolymer, Therban C3446, Fa. Lanxess ^{d} Zinkdimethylacrylat ^{e} Di(tert-butylperoxyisopropyl)benzol, Parkadox 1440, Fa. Akzo *RV1:* Reaktivverdünner 1, Hexandioldiacrylat (HDDA), Laromer^{®} HDDA, Fa. BASF *RV2*: Reaktivverdünner 2, aliphatisches Urethanacrylat, 70%ig gelöst in HDDA, Laromer^{®} LR 8987, Fa. BASF *RV3:* Reaktivverdünner 3, aliphatisches Urethanacrylat, 65%ig gelöst in Tripropylenglycoldiacrylat (TPGDA), Laromer^{®} UA 19 T, Fa. BASF *RV4:* Reaktivverdünner 4, ungesättigtes Polyesterharz, 55%ig gelöst in Dipropylenglycoldiacrylat (DPGDA), Laromer^{®} UP 35 D, Fa. BASF *RV5:* Reaktivverdünner 5, TPGDA, Laromer^{®} TPGDA, Fa. BASF | | | | | | | | | |

**Tabelle 2**

| | V1 | V2 | E1 | E2 | E3 | E4 | E5 | E6 | E7 |
|---|---|---|---|---|---|---|---|---|---|
| Geräusche | ++ | - | - | - | 0 | - | - | - | ++ |
| Abriebbeständigkeit | - | - | - | ++ | ++ | + | + | + | 0 |
| Ölbeständigkeit | - | 0 | - | ++ | ++ | ++ | ++ | ++ | 0 |
| Reibung | + | 0 | - | ++ | + | ++ | ++ | ++ | + |
| Wärmebeständigkeit | - | + | + | ++ | + | ++ | ++ | 0 | 0 |

| | | | | | | | | | |
|---|---|---|---|---|---|---|---|---|---|
| - : schlechteres Verhalten 0 : Neutrales Verhalten + : besseres Verhalten ++ : deutlich besseres Verhalten | | | | | | | | | |

Die Erfindung wird nun ferner anhand von zwei Ausführungsbeispielen unter Bezugnahme auf schematische Darstellungen beschrieben.

Es zeigen:
- Fig. 1: Längsschnitt durch einen Zahnriemen mit einer Beschichtung für die Kraftübertragungszone und für die Decklage.
- Fig. 2: Längsschnitt durch einen Kraftübertragungsriemen mit einer Oberflächenbeschichtung und einer Basisbeschichtung

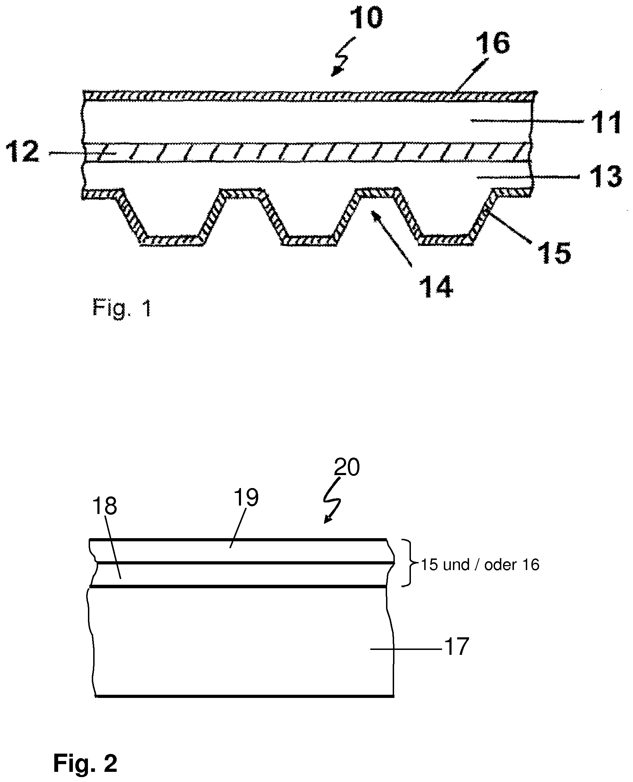

Figur 1 zeigt einen Antriebsriemen 10 in Form eines Zahnriemens mit einer Decklage 11 als Riemenrücken, einer Festigkeitsträgerlage 12 in Form von in Längsrichtung verlaufenden parallel angeordneten Zugträgern sowie mit einem Unterbau 13. Der Unterbau umfasst dabei die Kraftübertragungszone 14. Sowohl die Decklage 11 als auch die Kraftübertragungszone 14 sind jeweils mit einer Beschichtung 15, 16 versehen.

Figur 2 zeigt einen Kraftübertragungsriemen 20 mit einem elastischen Grundkörper 17 als Gesamteinheit von Decklage und Unterbau. Die Beschichtung 15, 16 der Kraftübertragungszone und / oder der Decklage weist eine Basisbeschichtung 18 und eine Oberflächenbeschichtung 19 auf. Die Basisbeschichtung 18 besteht aus einem textilen Werkstoff, die mit dem elastischen Grundkörper 17 einen Haftverbund bildet. Die Oberflächenbeschichtung 19 umfasst wenigstens ein Gemisch A, welches wenigstens einen Reaktivverdünner gemäß DIN 55945:2007-03 enthält. Hinsichtlich weiterer Bestandteile des Gemischs A sowie des Einsatzes eines zweiten Gemischs B wird auf die vorgenannten Ausführungen verwiesen.

Die Eindringtiefe der Oberflächenbeschichtung 19 in die Basisbeschichtung 18 entspricht wenigstens der Hälfte der Dicke der Basisbeschichtung 18. Dabei hat die Oberflächenbeschichtung 19 eine geschlossene Struktur ohne offene Poren.

### Bezugszeichenliste

### (Teil der Beschreibung)

- 10: Zahnriemen
- 20: Kraftübertragungsriemen
- 11: Decklage als Riemenrücken
- 12: Festigkeitsträger in Form von Zugsträngen
- 13: Unterbau
- 14: Kraftübertragungszone
- 15: Beschichtung der Kraftübertragungszone
- 16: Beschichtung der Decklage
- 17: elastischer Grundkörper
- 18: Basisbeschichtung
- 19: Oberflächenbeschichtung

## Patentansprüche

1. Kraftübertragungsriemen (10, 20) mit einem elastischen Grundkörper (17), umfassend eine Decklage (11) als Riemenrücken und einen Unterbau (13) mit einer Kraftübertragungszone (14), wobei die Kraftübertragungszone (14) und / oder die Decklage (11) mit einer Beschichtung (15, 16) versehen ist bzw. sind, wobei die Beschichtung (15, 16) der Kraftübertragungszone (14) und / oder der Decklage (11) wenigstens folgenden Schichtenaufbau aufweist:
- eine Basisbeschichtung (18) aus einem textilen Werkstoff, wobei die Basisbeschichtung (18) mit dem elastischen Grundkörper (17) einen Haftverbund bildet, und
- eine Oberflächenbeschichtung (19), die wenigstens ein Gemisch A umfasst, welches wenigstens einen Reaktivverdünner gemäß DIN 55945:2007-03 enthält, wobei der Reaktivverdünner gemäß DIN 55945:2007-03 ausgewählt ist aus der Gruppe der Methacrylate und / oder der Acrylate und / oder Vinylether und / oder Glycidylether.

2. Kraftübertragungsriemen nach Anspruch 1, **dadurch gekennzeichnet, dass** die Basisbeschichtung (18) ein Gewebe, Gewirke oder Gestrick ist.

3. Kraftübertragungsriemen nach Anspruch 1 oder 2, **dadurch gekennzeichnet, dass** der Reaktivverdünner gemäß DIN 55945:2007-03 ausgewählt ist aus der Gruppe der Methacrylate und / oder der Acrylate.

4. Kraftübertragungsriemen nach einem der Ansprüche 1 bis 3, **dadurch gekennzeichnet, dass** das Gemisch A 2 bis 90 Gew. -% eines Reaktivverdünners gemäß DIN 55945:2007-03 enthält.

5. Kraftübertragungsriemen nach einem der Ansprüche 1 bis 4, **dadurch gekennzeichnet, dass** das Gemisch A zusätzlich wenigstens ein Vernetzungsmittel und / oder wenigstens einen pulverförmigen Gleitkörper enthält.

6. Kraftübertragungsriemen nach einem der Ansprüche 1 bis 5, **dadurch gekennzeichnet, dass** die Oberflächenbeschichtung (19) zusätzlich wenigstens ein zweites Gemisch B enthält, welches aus wenigstens einem Isocyanat und /oder wenigstens einem Polyol aufgebaut ist.

7. Kraftübertragungsriemen nach einem der Ansprüche 1 bis 6, **dadurch gekennzeichnet, dass** das Verhältnis von Gemisch A zu zweitem Gemisch B 7:1 bis 1:1 beträgt.

8. Kraftübertragungsriemen nach einem der Ansprüche 1 bis 7, **dadurch gekennzeichnet, dass** er als Zahnriemen (10) ausgebildet ist.

9. Verfahren zur Herstellung eines Kraftübertragungsriemen (10, 20) mit einem elastischen Grundkörper (17), umfassend eine Decklage (11) als Riemenrücken und einen Unterbau (13) mit einer Kraftübertragungszone (14), wobei die Kraftübertragungszone (14) und / oder die Decklage (11) mit einer Beschichtung (15, 16) versehen wird, **gekennzeichnet durch** wenigstens folgende Verfahrensschritte:
- die Kraftübertragungszone (14) und / oder die Decklage (11) des noch unvulkanisierten Riemenrohlings wird mit einer Basisbeschichtung (18) aus einem textilen Werkstoff konfektioniert;
- auf die Basisbeschichtung (18) wird anschließend eine Oberflächenbeschichtung (19) aufgebracht, die wenigstens ein Gemisch A umfasst, welches wenigstens einen Reaktivverdünner gemäß DIN 55945:2007-03 enthält, und zwar unter Ausbildung einer Gesamtbeschichtung (15, 16), wobei der Reaktivverdünner gemäß DIN 55945:2007-03 ausgewählt ist aus der Gruppe der Methacrylate und / oder der Acrylate und / oder Vinylether und / oder Glycidylether;
- Vulkanisation des mit der Gesamtbeschichtung (15, 16) versehenen Riemenrohlings unter Ausbildung eines Haftverbundes von elastomerem Grundkörper (17) und Basisbeschichtung (19).

10. Verfahren nach Anspruch 9, **dadurch gekennzeichnet, dass** ein Gemisch A eingesetzt wird, welches zusätzlich wenigstens ein Vernetzungsmittel und / oder wenigstens einen pulverförmigen Gleitkörper enthält.

11. Verfahren nach Anspruch 9 oder 10, **dadurch gekennzeichnet, dass** eine Oberflächenbeschichtung (19) eingesetzt wird, die zusätzlich wenigstens ein zweites Gemisch B enthält, welches aus wenigstens einem Isocyanat und / oder wenigstens einem Polyol aufgebaut ist.

12. Verfahren nach einem der Ansprüche 9 bis 11 zur Herstellung eines Zahnriemens (10).

## Claims

1. Force transmission belt (10, 20) having an elastic foundational body (17), comprising a top ply (11) as belt backing and a substructure (13) having a force transmission zone (14), wherein the force transmission zone (14) and/or the top ply (11) is/are provided with a coating (15, 16), wherein the coating (15, 16) on the force transmission zone (14) and/or the top ply (11) has at least the following layered construction:
- a base coating (18) of a textile material, wherein the base coating (18) combines with the elastic foundational body (17) to form a bonded assembly, and
- a surface coating (19) comprising at least a mixture A, **characterized in that** the mixture A contains at least a reactive diluent as per DIN 55945:2007-03, wherein the reactive diluent as per DIN 55945:2007-03 is selected from the group of methacrylates and/or acrylates and/or vinyl ethers and/or glycidyl ethers.

2. Force transmission belt according to Claim 1, **characterized in that** the base coating (18) is a woven or knitted fabric.

3. Force transmission belt according to Claim 1, **characterized in that** the reactive diluent as per DIN 55945:2007-03 is selected from the group of methacrylates and/or acrylates.

4. Force transmission belt according to any one of Claims 1 to 3, **characterized in that** the mixture A contains from 2% to 90% by weight of a reactive diluent as per DIN 55945:2007-03.

5. Force transmission belt according to any one of Claims 1 to 4, **characterized in that** the mixture A additionally contains at least a crosslinking agent and/or at least a pulverulent gliding body.

6. Force transmission belt according to any one of Claims 1 to 5, **characterized in that** the surface coating (19) additionally contains at least a second mixture B constructed of at least an isocyanate and/or at least a polyol.

7. Force transmission belt according to any one of Claims 1 to 6, **characterized in that** the ratio of mixture A to second mixture B is in the range from 7:1 to 1:1.

8. Force transmission belt according to any one of Claims 1 to 7, **characterized in that** it is configured as a toothed belt (10).

9. Process for producing a force transmission belt (10, 20) having an elastic foundational body (17), comprising a top ply (11) as belt backing and a substructure (13) having a force transmission zone (14), wherein the force transmission zone (14) and/or the top ply (11) is provided a coating (15, 16), **characterized by** at least the steps of:
- coating the force transmission zone (14) and/or the top ply (11) of the still unvulcanized belt blank with a base coating (18) of textile material;
- subsequently applying to the base coating (18) a surface coating (19) comprising at least a mixture A comprising at least a reactive diluent as per DIN 55945:2007-03 to form an overall coating (15, 16); wherein the reactive diluent as per DIN 55945:2007-03 is selected from the group of methacrylates and/or acrylates and/or vinyl ethers and/or glycidyl ethers;
- vulcanizing the belt blank provided the overall coating (15, 16) to form a bonded assembly of elastomeric foundational body (17) and base coating (19).

10. Process according to Claim 9, **characterized in that** a mixture A used additionally contains at least a crosslinking agent and/or at least a pulverulent gliding body.

11. Process according to Claim 9 or 10, **characterized in that** a surface coating (19) used additionally contains at least a second mixture B constructed of at least an isocyanate and/or at least a polyol.

12. Process according to any one of Claims 9 to 11 for producing a toothed belt (10).

## Revendications

1. Courroie de transmission d'énergie (10, 20) à corps de base élastique (17), comprenant une couche supérieure (11) en tant que dos de courroie et une sous-structure (13) comprenant une zone de transmission de force (14), la zone de transmission de force (14) et/ou la couche supérieure (11) étant munies d'un revêtement (15, 16), le revêtement (15, 16) de la zone de transmission de force (14) et/ou de la couche supérieure (11) présentant au moins la structure de couches suivante : - un revêtement de base (18) en un matériau textile, le revêtement de base (18) formant un composite à adhérence avec le corps de base élastique (17), et - un revêtement de surface (19), qui comprend au moins un mélange A, **caractérisé en ce que** le mélange A contient au moins un diluant réactif selon DIN 55945:2007-03, le diluant réactif selon DIN 55945:2007-03 étant choisi dans le groupe des méthacrylates et/ou des acrylates et/ou des éthers de vinyle et/ou des éthers de glycidyle.

2. Courroie de transmission d'énergie selon la revendication 1, **caractérisée en ce que** le revêtement de base (18) est un tissu un tissu à mailles ou un tricot.

3. Courroie de transmission d'énergie selon la revendication 1, **caractérisée en ce que** le diluant réactif selon DIN 55945:2007-03 est choisi dans le groupe des méthacrylates et/ou des acrylates.

4. Courroie de transmission d'énergie selon l'une quelconque des revendications 1 à 3, **caractérisée en ce que** le mélange A contient 2 à 90 % en poids d'un diluant réactif selon DIN 55945:2007-03.

5. Courroie de transmission d'énergie selon l'une quelconque des revendications 1 à 4, **caractérisé en ce que** le mélange A contient en outre au moins un agent de réticulation et/ou au moins un corps glissant en poudre.

6. Courroie de transmission d'énergie selon l'une quelconque des revendications 1 à 5, **caractérisé en ce que** le revêtement de surface (19) contient en outre au moins un second mélange B, qui est formé par au moins un isocyanate et/ou au moins un polyol.

7. Courroie de transmission d'énergie selon l'une quelconque des revendications 1 à 6, **caractérisée en ce que** le rapport entre le mélange A et le second mélange B est de 7:1 à 1:1.

8. Courroie de transmission d'énergie selon l'une quelconque des revendications 1 à 7, **caractérisée en ce qu'**elle est configurée sous la forme d'une courroie dentée (10).

9. Procédé de fabrication d'une courroie de transmission d'énergie (10, 20) à corps de base élastique (17), comprenant une couche supérieure (11) en tant que dos de courroie et une sous-structure (13) comprenant une zone de transmission de force (14), la zone de transmission de force (14) et/ou la couche supérieure (11) étant munies d'un revêtement (15, 16), **caractérisé par** au moins les étapes de procédé suivantes :
- la zone de transmission de force (14) et/ou la couche supérieure (11) de l'ébauche de courroie encore non vulcanisée est assemblée avec un revêtement de base (18) en un matériau textile ;
- un revêtement de surface (19) est ensuite appliqué sur le revêtement de base (18), qui comprend au moins un mélange A, qui contient au moins un diluant réactif selon DIN 55945:2007-03, et ce avec formation d'un revêtement total (15, 16) ;
le diluant réactif selon DIN 55945:2007-03 étant choisi dans le groupe des méthacrylates et/ou des acrylates et/ou des éthers de vinyle et/ou des éthers de glycidyle ;
- la vulcanisation de l'ébauche de courroie munie du revêtement total (15, 16) avec formation d'un composite à adhérence d'un corps de base élastomère (17) et d'un revêtement de base (19).

10. Procédé selon la revendication 9, **caractérisé en ce qu'**un mélange A est utilisé, qui contient en outre au moins un agent de réticulation et/ou au moins un corps glissant en poudre.

11. Procédé selon la revendication 9 ou 10, **caractérisé en ce qu'**un revêtement de surface (19) est utilisé, qui contient en outre au moins un second mélange B, qui est formé par au moins un isocyanate et/ou au moins un polyol.

12. Procédé selon l'une quelconque des revendications 09 à 11, pour la fabrication d'une courroie dentée (10).
